# EUROPEAN PATENT SPECIFICATION

(11) **EP 1 509 186 B1**
(45) Date of publication and mention of the grant of the patent: **09.11.2005**
(21) Application number: 03752728.0
(22) Date of filing: 09.05.2003
(51) Int. Cl.: A61G 5/06, B62D 55/075, E06B 9/84

(54) **SAFETY DEVICE FOR MOTOR-DRIVEN TRACKED CARRIAGES**
SICHERHEITSVORRICHTUNG FÜR MOTORBETRIEBENE SCHLITTEN
DISPOSITIF DE SECURITE POUR VEHICULES A CHENILLES ENTRAINES PAR UN MOTEUR

(30) Priority: 20.05.2002 IT BO20020051 U
(43) Date of publication of application: 02.03.2005
(73) Proprietor: T.G.R. S.r.l., 40064 Ozzano Emilia (IT)
(72) Inventor: TOSELLI, Emilio, I-40064 Ozzano Emilia (IT)
(74) Representative: Porsia, Dino
(86) International application number: PCT/EP2003/004870
(87) International publication number: WO 2003/096954

## Description

The invention relates to a motor-driven tracked carriage as described in Italian patent No. 234 099 of 22 April 1994 and illustrated in part and in plan view from above in Figure 1 of the attached drawings. The carriage comprises a flat rectilinear frame 1 equipped on either side with rubber belts 2, 2' which also extend to the upwardly inclined rear sections 101 of the said frame, which belts have internal teeth and travel around internal toothed wheels 3, 3' and also around external upper wheels 4, 4' situated in the consecutive region of the said parts 1 and 101. The two front toothed wheels 3 are keyed to the opposite ends of a shaft 5 supported rotatably by bearings in a sleeve 6 extending across the frame 1 and connected to the frame by adjustable support means 7.

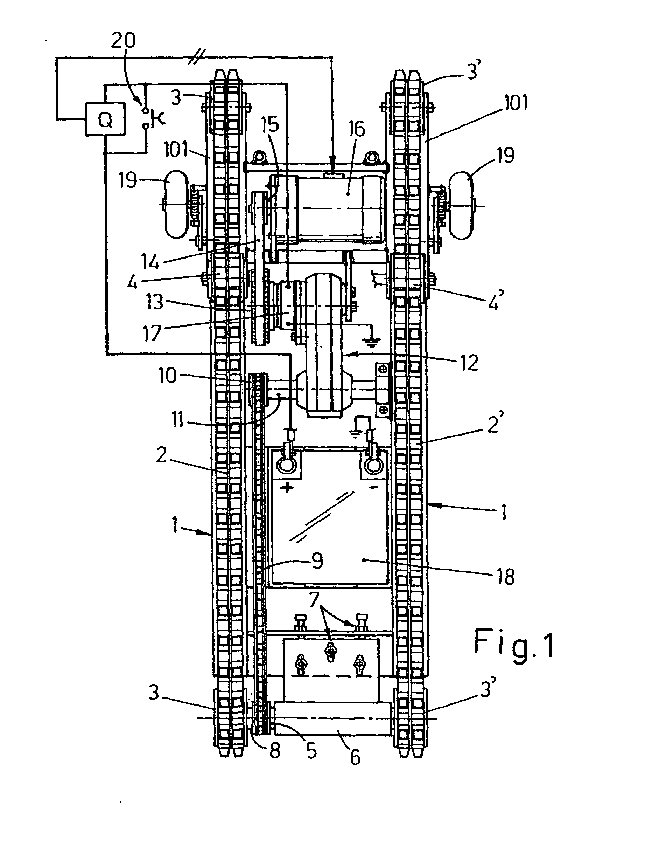

Keyed to the shaft 5 is a pinion 8 which is connected by a chain 9 to the pinion 10 keyed to the output shaft 11 of a speed reducer 12 supported in a known manner by the frame 1. Keyed to the fast input shaft of the reducer is a toothed pulley 13 which, via the toothed belt 14, is connected to the toothed pulley 15 keyed to the shaft of an electric motor 16. The latter can turn in both directions and is attached through its housing in a known manner to the frame 1. The fast shaft of the reducer 12 passes through an electromagnetic brake 17 which has one part fixed to the housing of the reducer and one part fixed to the toothed pulley 13. This brake 17 is normally on and is automatically energized and kept open in phase with the supply to the electric motor 16. An electric accumulator 18 mounted on the frame 1 supplies the electrical energy necessary to operate the carriage. The number 19 indicates idle rubber wheels positioned on either side of the rear part of the frame 1: these have their own lock/release mechanism which is not illustrated because it is not required for an understanding of the present improvements and are used to steer the carriage when it arrives on the landings of the stairway. The carriage illustrated in Figure 1 is without the steering column, the handlebar of which supports the electric box with the controls Q, by which it is possible to operate the electric motor 16 and the simultaneous energizing of the brake 17. The steering column has also not been illustrated as being extraneous to the improvements described herein.

In a carriage of the type described, there is always a chance that the chain 9 could break, even if a chain of the appropriate strength is selected. It is obvious that if the chain 9 were to break when the carriage was on a flight of stairs, the belts would cease to be connected to the drive system 12-16 and the carriage would descend the stairs with uncontrolled speed. Carriages of known type have no safety device to automatically prevent the belts moving in the event of the chain 9 breaking. To remedy this problem, the innovation provides a mechanical safety device consisting of a feeler that detects the presence and integrity of the chain and normally holds back a pawl loaded by an opposing spring. Should the chain break, the feeler moves out of the way of the pawl and the pawl is pivoted by its own spring into engagement with the teeth of one of the front toothed pulleys 3 of the belts, thereby locking it.

Document US-A-6 070 641 discloses a safety device comprising a shoe that is kept pressed by the action of elastic means against one side of a chain and that is mounted on a mechanism which normally holds back a pawl hinged near to a pulley, the pawl being loaded by its own elastic means and being designed so that if the said shoe detects the chain giving way the pawl is released and moves into engagement with parts of the adjacent pulley under the action of its own elastic means. Furthermore, the pawl is positioned tangentially next to the toothed pulley and is hinged with the hinge axis parallel to the axis of said pulley, the pawl being located and dimensioned such that if activated, it engages with the teeth of the said pulley to prevent rotation.

The safety device of the present invention is defined in claim 1.

Other features of the present mechanical safety device, and the advantages procured thereby, will become clearer in the course of the following description which refers to the figures of the attached sheets of drawings in which:
- Fig. 2 is a perspective view of the device with the various components moved away from each other for greater visibility;
- Figs 3 and 4 are a perspective view and a plan view from above, respectively, of the safety device in the disengaged condition, with the power transmission chain intact; and
- Fig. 5 illustrates the safety device in plan view from above and in the engaged condition into which it is thrown automatically if the power transmission chain gives way.

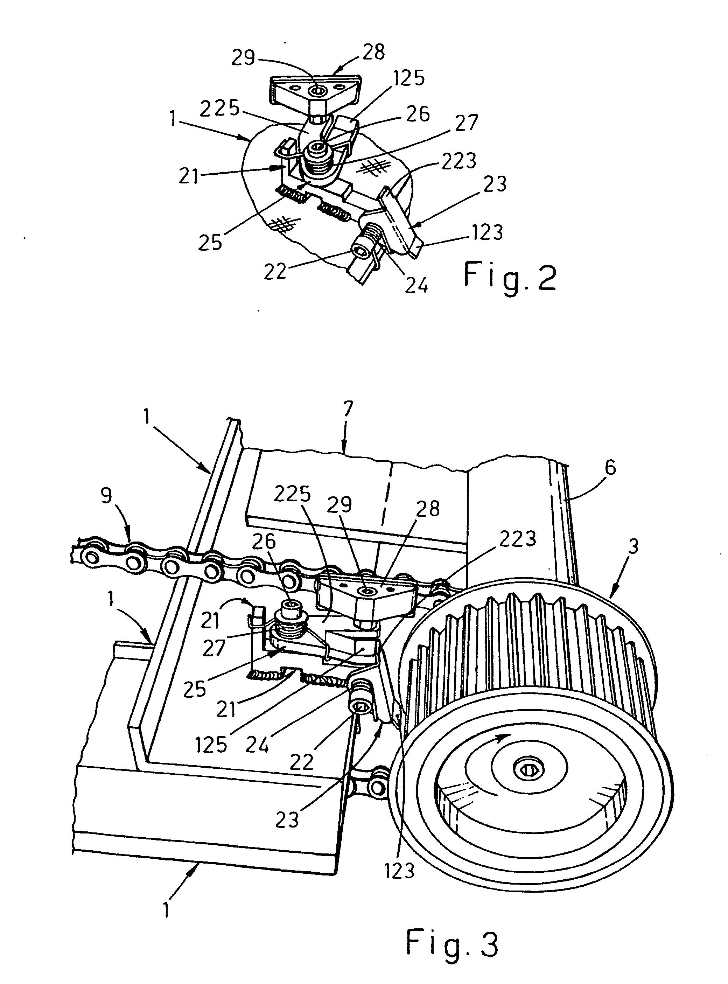

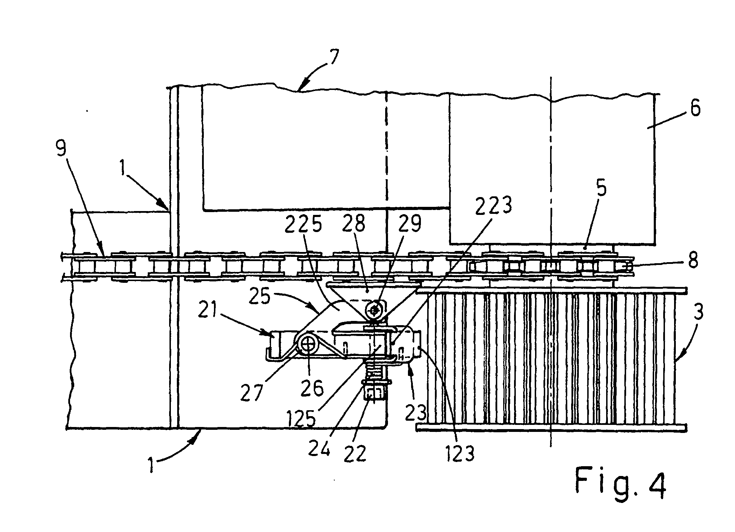

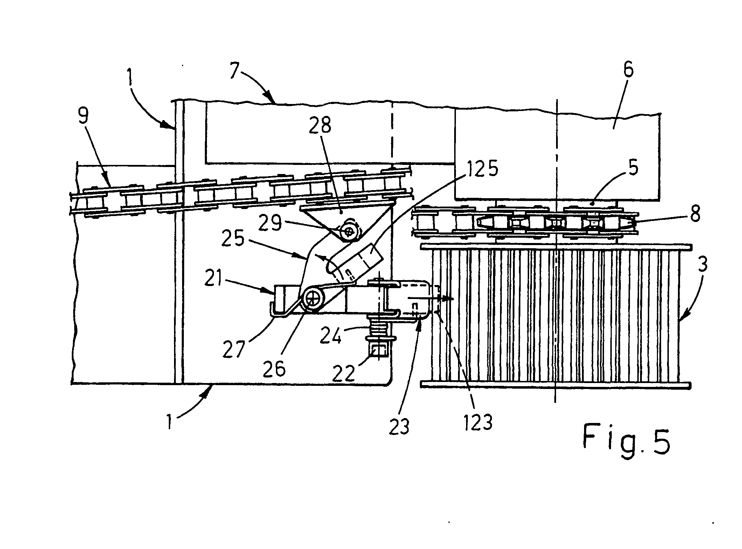

Figures 2, 3 and 4 illustrate the end of the sleeve 6 from which there projects the rotating shaft 5 section on which is keyed the end pinion 8 of the drive chain 9 and these figures also illustrate the front toothed pulley 3, next to the pinion 8 carrying one of the belts of the carriage. The carriage itself has not been depicted in order to show the present safety device which would otherwise be covered by the belt and which is located next to the said pulley 3. Welded to the corner of the frame 1 near the front toothed pulley 3 is a bracket 21 of a roughly L-shaped side profile, oriented with its foot perpendicular to the axis of the said pulley 3 and extending as far as the front edge of the frame 1, where it supports, hinged transversely to a strong pin 22, a pawl 23 made of, for example, sheet steel bent into a U, so as to be ribbed and well able to withstand the stresses of flexure-torsion and compression and in such a way as to have side lugs to act as a fulcrum between the load and the effort on the said pin 22 which projects from one side of the pawl to support the helical part of a pin spring 24, one end of which presses against the frame 1 while the other end is secured under the pawl to tend to push upward the end of the pawl oriented towards to the toothed pulley 3, so that if the pawl is left to its own devices it will engage with the teeth of the pulley 3 and stop it rotating clockwise (when viewing Figure 3), because this is the direction of rotation of this pulley when the carriage in question is descending a flight of stairs. When the carriage is climbing up a flight of stairs, it does so in reverse, so that in an emergency, where it has to descend the same stairs, the pulleys 3 rotate clockwise as stated with reference to Figure 3. The pawl 23 has superior qualities of resistance to mechanical stresses, due to a carbonitriding treatment and possesses at the front an inclined flat tab 123 for definite engagement with the teeth of the pulley 3 and also on the rear end the same pawl possesses a straight flat tab 223 which, in situations of correct operation of the carriage, when the pawl 23 is held off the pulley 3, rests against the free end of one of the arms 125 of a flat V-shaped lever 25, the angled part of which is hinged on a raised portion of the foot of the bracket 21, by means of the vertical pin 26 which partly projects from this lever to support the helical part of a pin spring 27, one leg of which is secured to the outward flank of the arm 125 while the other leg is secured to the post of the bracket 21, in such a way as to tend to push the arm 125 away from the pawl 23. However, it is prevented from pushing it away by a shoe 28 hinged vertically at 29 on the end of the other arm 225 of the lever 25: this shoe normally presses against one side of the upper length of the chain 9, is made from a material with a low coefficient of friction, and has a length such as always to touch at least two consecutive pins of this chain, so as not to vibrate as the chain 9 moves past it. Figures 3 and 4 show clearly that in situations of normal operation of the carriage, the end 123 of the pawl 23 is held away from the toothed pulley 3, as the other end 223 of the same pawl is engaged by the arm 125 of the lever 25 and the shoe 28 is in contact with the drive chain 9. Figure 5 shows however that, if the chain 9 gives way or breaks, the lever 25 pivots towards the chain, removing its arm 125 from the pawl 23 which, being no longer supported, is pushed by its own spring 24 into engagement with the toothed pulley 3 via its front end 123.

## Claims

1. Safety device for a motor-driven tracked carriage, suitable for transporting a wheelchair with the disabled person on board even on stairs or other flat or non-flat inclined surfaces, of the type in which two internal toothed pulleys (3) of the belts are keyed to the ends of a shaft (5) supported rotatably by a sleeve (6) fixed to the frame (1) of the said carriage, keyed to which shaft is a pinion (5) around which travels a chain (9) connected at the other end to the electromechanical propulsion unit (10-16) of the said carriage, the device comprising
- a shoe (28) that is kept pressed by the action of elastic means (27) against one side of the said chain and that is mounted on a mechanism which normally holds back a pawl (23) hinged to the carriage frame near one of the said internal pulleys (3) of the belts, which is loaded by its own elastic means (24) and which is designed so that if the said shoe detects the chain giving way, the pawl is released and subjected to the action of its own elastic means which move it into engagement with parts of the adjacent pulley (3) of the belts, to prevent it rotating in the direction which would cause the tracked carriage to descend the stairs;
- the pawl (23) being positioned tangentially next to the toothed pulley (3) of the belts which it must be able to lock, and is hinged to the carriage frame (1), its hinge axis being parallel to the axis of the said pulley and its more general location and its dimensions are such that if activated, the said pawl engages with the teeth of the said pulley (3) to prevent it rotating in the direction which would cause the carriage to descend the stairs; **characterised by**
- said pawl (23) being produced by cutting and bending sheet steel, so as to produce a U-shaped transverse profile conferring great resistance to mechanical stresses, the side walls of the said pawl tapering towards the ends of the pawl and being hinged transversely between the load and the effort to the end of a bracket (21) fixed to the carriage frame, while the helical part of a pin spring (24) is wound around the projecting end of the pivot pin (22) of the pawl and tends to push the pawl into engagement with the teeth of the adjacent toothed pulley (3), wherein
the pawl (23) also possesses a flat extension table (223) on the rear end, which, when the said pawl is in the disengaged condition, engages with the end of one of the arms (125) of a V-shaped lever (25) that is hinged at its angled part on a vertical pin (26) fixed to the bracket (21) of the said pawl, while hinged to the end of the other arm (225) of the same lever (25) is the shoe (28) which touches one side of the drive chain (9) and which is pushed against this chain by a pin spring (27), the helical part of which is wound around a projecting portion of the said pivot pin (26) of the said V-shaped lever and which acts via one end on this lever while the other end interacts with a vertical upright of the said pawl bracket (21), the whole being structured in such a way that if the shoe (28) detects that the drive chain is giving way, the V-shaped lever supporting it rotates and moves out of the way of the pawl (23), which locks the adjacent toothed pulley (3).

2. Device according to Claim 1, in which the shoe (28) has a length such as always to contact at least two consecutive pins of the drive chain (9), so as not to vibrate as the chain moves past.

## Patentansprüche

1. Sicherheitsvorrichtung für einen motorbetriebenen Schlitten, der dafür geeignet ist, einen Rollstuhl mit einer behinderten Person darin sogar auf Treppen oder anderen ebenen oder unebenen geneigten Flächen zu transportieren, von der Art, bei der zwei gezahnte innere Riemenscheiben (3) der Förderbänder an den Enden einer Welle (5) festgekeilt sind, die drehbar von einer Buchse (6) gehalten wird, die an dem Rahmen (1) des Schlittens befestigt ist, wobei an der Welle ein Ritzel (5) festgekeilt ist, um den eine Kette (9) läuft, die an dem anderen Ende mit der elektromechanischen Antriebseinheit (10-16) des Schlittens verbunden ist, wobei
- ein Schuh (28) durch die Wirkung eines Federmittels (27) gegen eine Seite der Kette gedrückt gehalten wird und an einem Mechanismus angebracht ist, der normalerweise eine Sperrklinke (23) zurückhält, die in der Nähe einer der inneren Riemenscheiben (3) der Förderbänder durch ein Scharnier an dem Schlittenrahmen befestigt ist und die durch ihr eigenes Federmittel (24) vorgespannt und so konstruiert ist, dass, wenn der Schuh ein Nachgeben der Kette erfasst, die Sperrklinke ausgelöst und der Wirkung ihres eigenen Federmittels unterworfen wird, das sie in Eingriff mit Teilen der angrenzenden Riemenscheibe (3) der Förderbänder bringt, um deren Drehen in die Richtung, bei der bewirkt würde, dass der Schlitten die Treppe hinunterfährt, zu verhindern;
- die Sperrklinke (23) tangential neben der gezahnten Riemenscheibe (3) der Förderbänder positioniert ist, die sie sperren können muss, und durch ein Scharnier an dem Schlittenrahmen (1) befestigt ist, wobei ihre Scharnierachse parallel zu der Achse der Riemenscheibe verläuft, und ihre Gesamtpositionierung und Abmessungen so sind, dass die Sperrklinke bei Aktivierung mit den Zähnen der Riemenscheibe (3) eingreift, um deren Drehen in die Richtung, bei der bewirkt würde, dass der Schlitten die Treppe hinunterfährt, zu verhindern; **dadurch gekennzeichnet, dass**
- die Sperrklinke (23) hergestellt wird, indem Stahlblech geschnitten und gebogen wird, so dass ein U-förmiges Querprofil entsteht, das einen hohen Widerstand gegen mechanische Belastungen bietet, wobei die Seitenwände der Sperrklinke sich zu den Enden der Sperrklinke hin verjüngen und quer zwischen der Last und der Kraft am Ende einer an dem Schlittenrahmen befestigten Stütze (21) durch ein Scharnier befestigt sind, während der helixförmige Teil einer Stiftfeder (24) um das vorstehende Ende des Drehstifts (22) der Sperrklinke gewunden ist und dazu neigt, die Sperrklinke in Eingriff mit den Zähnen der angrenzenden gezahnten Riemenscheibe (3) zu drücken, wobei
- die Sperrklinke (23) auch einen ebenen Ausziehtisch (223) an dem hinteren Ende aufweist, der, wenn die Sperrklinke nicht in Eingriff steht, mit dem Ende eines der Arme (125) eines V-förmigen Hebels (25) eingreift, der an dem Teil, wo er den Winkel aufweist, durch ein Scharnier an einem vertikalen Stift (26) befestigt ist, der an der Stütze (21) der Sperrklinke befestigt ist, während an dem Ende des anderen Arms (225) desselben Hebels (25) der Schuh durch ein Scharnier befestigt ist, der eine Seite der Antriebskette (9) berührt und gegen diese Kette durch eine Stiftfeder (27) gedrückt wird, deren helixförmiger Teil um einen vorstehenden Abschnitt des Drehstifts (26) des V-förmigen Hebels gewunden ist und die über ein Ende auf diesen Hebel einwirkt, während das andere Ende mit einem vertikalen Ständer der Sperrklinkenstütze (21) zusammenwirkt, wobei das Ganze so aufgebaut ist, dass, wenn der Schuh (28) ein Nachgeben der Kette erfasst, der V-förmige Hebel, der ihn stützt, dreht und sich aus dem Weg der Sperrklinke (23) weg bewegt, die die angrenzende gezahnte Riemenscheibe (3) sperrt.

2. Vorrichtung nach Anspruch 1, bei der der Schuh (28) eine solche Länge hat, dass er immer wenigstens mit zwei aufeinander folgenden Stiften der Antriebskette (9) in Verbindung steht, so dass er nicht vibriert, wenn sich die Kette an ihm vorbei bewegt.

## Revendications

1. Un dispositif de sécurisation pour un véhicule à chenilles motorisé convenant pour transporter une chaise roulante avec la personne handicapée à son bord même sur des escaliers ou d'autres surfaces inclinées planes ou non planes, du type dans lequel deux poulies crantées internes (3) des courroies sont calées aux extrémités d'un arbre (5) fixé avec possibilité de rotation par un manchon (6) attaché au châssis (1) dudit véhicule, un pignon (5) étant calé audit arbre, une chaîne (9) étant entraînée autour du pignon qui est reliée à son autre extrémité avec l'unité de propulsion électromécanique (10-16) dudit véhicule, le dispositif comprenant
un sabot (28) qui est maintenu pressé contre un côté de ladite chaîne par l'action de moyens élastiques (27) et qui est disposé sur un mécanisme qui retient normalement un cliquet (23) articulé au ou monté à pivotement sur le châssis du chariot à proximité de l'une desdites poulies internes (3) des courroies, qui est chargé par ses propres moyens élastiques (24) et qui est configuré de manière à ce que le cliquet soit relâché si ledit sabot détecte que la chaîne se relâche et soit soumis à l'action de ses propres moyens élastiques qui le déplacent en engagement avec des parties de la poulie adjacente (3) des courroies afin d'empêcher sa rotation dans la direction selon laquelle le véhicule à chenilles descendrait les escaliers ;
le cliquet (23) étant positionné tangentiellement à côté de la poulie crantée (3) des courroies qu'il doit pouvoir verrouiller, et est articulé au châssis (1) du chariot, son axe d'articulation étant parallèle à l'axe de ladite poulie et sa disposition plus générale et ses dimensions étant telles que s'il est déclenché, ledit sabot se met en engagement avec les dents de ladite poulie (3) afin d'empêcher sa rotation dans la direction selon laquelle le véhicule à chenilles descendrait les escaliers ; **caractérisé en ce que**
ledit cliquet (23) étant produit par la découpe et le cintrage d'un feuillet d'acier, de manière à produire un profilé transversal en forme de U conférant une grande résistance aux contraintes mécaniques, les parois de côté dudit cliquet s'amincissant en direction des extrémités du cliquet et étant transversalement articulées entre la charge et l'effort à l'extrémité d'un support (21) attaché au châssis du chariot, la partie hélicoïdale d'un ressort de détente (24) étant enroulée autour de l'extrémité en saillie de l'axe fixe ou pivot (22) du cliquet et tendant à pousser le cliquet en engagement avec les dents de la poulie crantée (3) adjacente, dans lequel
le cliquet (23) possède également une table d'extension plate (223) sur son extrémité arrière qui, lorsque ledit cliquet est dans un état désengagé, se met en engagement avec l'extrémité de l'un des bras (125) d'un levier en forme de V (25) qui est articulé à sa partie angulaire sur un axe vertical (26) attaché au support (21) dudit cliquet, le sabot étant articulé à l'extrémité de l'autre bras (225) du même levier (25), touchant un côté de la chaîne d'entraînement (9) et étant poussé contre cette chaîne par un ressort de détente (27), la partie hélicoïdale duquel est enroulée autour d'une portion en saillie dudit axe fixe ou pivot (26) dudit levier en forme de V et qui agit au moyen d'une extrémité sur ce levier alors que l'autre extrémité agit sur un montant vertical dudit support de cliquet (21), l'ensemble étant structuré de manière à ce que le levier en forme de V supportant le sabot entre en rotation et se déplace en dehors du champ de mouvement du cliquet (23) si le sabot (28) détecte que la chaîne d'entraînement se relâche, le cliquet verrouillant la poulie crantée (3) adjacente.

2. Un dispositif selon la revendication 1, dans lequel le sabot (28) possède une longueur telle qu'il demeure toujours en contact avec au moins deux goujons ou maillons consécutifs de la chaîne d'entraînement (9), afin de ne pas vibrer lorsque la chaîne passe devant.
